# EUROPEAN PATENT SPECIFICATION

(11) **EP 4 197 136 B1**
(45) Date of publication and mention of the grant of the patent: **13.03.2024**
(21) Application number: 21755984.8
(22) Date of filing: 09.08.2021
(51) Int. Cl.: H04L 47/726, H04L 65/80, H04L 65/1069, H04L 47/20

(54) **POLICY CONTROL FOR REDUNDANT TRANSMISSIONS**
RICHTLINIENSTEUERUNG FÜR REDUNDANTE ÜBERTRAGUNGEN
CONTRÔLE DE POLITIQUE POUR DES TRANSMISSION REDONDANTES

(30) Priority: 13.08.2020 US 202063065284 P; 13.08.2020 EP 20382751
(43) Date of publication of application: 21.06.2023
(73) Proprietor: Telefonaktiebolaget LM Ericsson (publ), 164 83 Stockholm (SE)
(72) Inventor: PANCORBO MARCOS, Maria, Belen, 28035 Madrid (ES); GARCIA AZORERO, Fuencisla, 28014 Madrid (ES); LOPEZ SERRANO, Miguel, Angel, 28026 Madrid (ES); FERNANDEZ ALONSO, Susana, 28009 Madrid (ES)
(74) Representative: Ericsson
(86) International application number: PCT/EP2021/072176
(87) International publication number: WO 2022/034030

(56) References cited:
- WO-A1-2020/150333
- NOKIA ET AL: "Providing background data transfer policies to a UE", 3GPP DRAFT; S2-1903324_23502_SOLUTION ON PROVIDING BACKGROUND DATA TRANSFER POLICIES TO A UE, 3RD GENERATION PARTNERSHIP PROJECT (3GPP), MOBILE COMPETENCE CENTRE ; 650, ROUTE DES LUCIOLES ; F-06921 SO , vol. SA WG2, no. Xian, P.R.China; 20190408 - 20190412 2 April 2019 (2019-04-02), XP051719487, Retrieved from the Internet: URL:http://www.3gpp.org/ftp/tsg%5Fsa/WG2%5 FArch/TSGS2%5F132%5FXiAn/Docs/S2%2D1903324 %2Ezip [retrieved on 2019-04-02]

## Description

### TECHNICAL FIELD

Disclosed are embodiments related to policy control for redundant transmissions.

### BACKGROUND

3GPP defines a Policy and Charging Control (PCC) architecture that allows handling PCC in the network. This architecture is defined in 3GPP TS 23.503 (5G) or TS 23.203 (EPS). For the sake of simplicity brevity, the description here is based on the 5G architecture, but similar technology exists in EPC as well.

The PCF (Policy Control Function) is a functional element that encompasses policy control decision and flow based charging control functionalities. The PCF provides network control regarding service data flow detection, gating, Quality-of-Service (QoS) and flow based charging (except credit management) towards the Session Management Function (SMF). The PCF receives session and media related information from an Application Function (AF) and informs AF of traffic plane events.

The PCF shall provision PCC Rules to the SMF via the N7 reference point. The PCF shall inform the SMF through the use of PCC rules on the treatment of each service data flow that is under PCC control, in accordance with the PCF policy decision(s).

The PCF provides UE policies, including Access Network Discovery and Selection Policy (ANDSP), UE Route Selection Policy (URSP), Vehicle-to-Everything Policy (V2XP) via the AMF (N15 interface) transparently to the UE.

The SMF and User Plane Function (UPF) encompasses service data flow detection based on the filters definitions included in the PCC rules and policy enforcement.

### A. Redundant transmission for high reliability communication

In order to support ultra-reliable low-latency communication (URLLC) services, a UE may set up two redundant Packet Data Unit (PDU) Sessions over the 5G network, such that the 5G network sets up the user plane paths of the two redundant PDU Sessions to be disjoint. Support of redundant PDU Sessions is defined in TS 23.501 and includes the following:
i) the UE initiates two redundant PDU Session and provides different combination of Data Network name (DNN) and Single-Network Slice Selection Assistance Information (S-NSSAI) for each PDU Session;
ii) The SMF determines whether the PDU Session is to be handled redundantly, which determination is based on the policies provided by PCF for the PDU Session, combination of the S-NSSAI, DNN, user subscription and local policy configuration; the SMF uses these inputs to determine the RSN which differentiates the PDU Sessions that are handled redundantly and indicates redundant user plane requirements for the PDU Sessions in NG-RAN.

It is also specified in TS 23.501 that in order to establish two redundant PDU sessions and associate the duplicated traffic coming from the same application to these PDU sessions, UE route selection policy (URSP) rules can be sent to the UE, and duplicated traffic from the application, associated to the redundant PDU Sessions, is differentiated by two distinct traffic descriptors, each in a distinct URSP rule. These traffic descriptors need to have different DNNs, Internet Protocol (IP) descriptors or non-IP descriptors (e.g. MAC address, virtual local area network (VLAN) ID), so that the two redundant PDU sessions are matched to the Route Selection Descriptors of distinct URSP rules.

Solutions related to the present disclosure can e.g. be found in the patent application published as WO 2020/150333 A1. Disclosed herein is a wireless device that receives from a first station or a TSN bridge, a request indicating configuration of a time sensitive network (TSN) bridge for transmission of a stream of data packets. The wireless device sends to a session management function (SMF), a non-access stratum message comprising at least one parameter for configuration of the TSN bridge. The wireless device receives from the SMF, a response message indicating that the TSN bridge is configured for transmission of the stream of data packets. The wireless device sends to the first station, a message indicating successful configuration of the TSN bridge.

Other solutions related to the present disclosure can e.g. be found in the 3GPP document NOKIA ET AL: "Providing background data transfer policies to a UE", 3GPP DRAFT; S2-1903324_23502_SOLUTION ON PROVIDING BACKGROUND DATA TRANSFER POLICIES TO AUE, 3RD GENERATION PARTNERSHIP PROJECT (3GPP), MOBILE COMPETENCE CENTRE ; 650, ROUTE DES LUCIOLES ; F-06921 so vol. SA WG2, no. Xian, P.R.China; 20190408 - 20190412 2 April 2019 (2019-04-02), XP051719487. Herein it is noted that the xBDT WID (SP-180509) includes 4 objectives:
1) The existing URSP framework will be used for delivery of policy information related to background data transfer from 5G core network to the UE.
2) The policy information content will define time window and location criteria that need to be met for background data transfer.
3) How and when the PCF activates/disbributes the policies related with background data transfer to the UEs will be defined.
4) There is a single dedicated PDU Session that is used for background data transfer which is established and released based on the background data transfer policies.

To resolve 1) there are 2 options:
- Option 1 Extend URSP rule to include Background Data Transfer policy information
- Option 2 Define a standalone Background Data Transfer Policy Rule

Since the Background Data Transfer Policy is applied to the AF session that can be identified by one of the traffic descriptor used for URSP, the URSP and the Background Data Transfer Policy Rule may share the same traffic descriptor, then extending URSP to include Background Data Transfer Policy can reduce the size of the UE policy when they are provided together, thus the N1 signaling can be reduced. For application traffic subject to BDT, in many cases the URSP and BDT policy are provided together, e.g. when AF is about to start the traffic transfer, it triggers PCF to deliver all the required policy. In addition, to fulfill objective 4), when associating applications to PDU Sessions, the UE needs to consider both URSP and the Background Data Transfer Policy, then it is easier for the UE to perform PDU session association. Hence, Option 1 is preferred, and Option 1 also allows to transfer URSP and BDTP separately.

To resolve Objective 3), it is proposed to reuse the URSP delivery mechanism and the BDT policy delivery is triggered by the AF when it decides that the UE can start to transfer UL data.

To resolve Objective 4),
To fulfill what is required in Objective 4), for the same [DNN, S-NSSAI, SSC mode, PDU Session Type Selection, Access Type], there may be 2 PDU sessions, one for BDT and one for non-BDT, and the UE can only select the one subject to BDT control if BDT control is required for the AF session, however, there's no such restriction in DL for the same AF session. Hence, in a [DNN, S-NSSAI], the same AF session may be bound to 2 different PDU sessions in UL and in DL. However, the AF usually expect to have a single PDU session for both UL and DL to reduce the complexity of its service logic. To achieve that, BDT indicator is introduced as an attribute of the PDU session to allow either the UE or the PCF to bind the AF session to the same PDU session. In that way, the total number of PDU sessions per UE can be reduced. To summarize, This document discloses: 1) Procedures for future background data transfe and Npcf_BDTPolicyControl service to inlcude the new attrubutes for UE Background Data Transfer policies. 2) Update the PDU session establishment procedure and Nsmf_PDUSession_CreateS M Context service operation to include the Background Data Transfer indicator. 3) Update the SM Policy Association Establishment procedure and Npcf_SMPolicyControl_Create service operation to include the Background Data Transfer indicator.

### SUMMARY

Certain challenges presently exist. For example, the SMF cannot determine if a PDU session is to be handled redundantly because one of the inputs is the policies provided by the PCF that are not defined, and there is no possibility for the network to check that the UE that is provisioned with URSP rules to request redundant transmission to two different DNNs is actually using these DNNs to request redundancy transmission.

Accordingly, this disclosure provides embodiments in which a) a PCF determines if a PDU session is handled redundantly based on subscription information that indicates if the subscriber can have redundant transmission and PDU session capabilities to support redundant transmission; the PCF provides a redundancy indication to the SMF and the SMF uses the indication from the PCF to set the Redundancy Sequence Number (RSN) value towards RAN and b) the PCF serving the UE stores the indication of redundant URSP rule pairs per DNN and S-NSSAI that is later used at PDU session establishment to determine if the PDU session should be handled redundantly.

In some embodiments, the PCF, either by subscription and/or local policies is aware of the services that require redundant transmission paths. The PCF then determines: i) whether the redundancy is enabled in the UE for traffic of the applications that require redundant sessions with the definition of the corresponding URSP rules; ii) whether redundancy is enabled in the SMF for the traffic of the applications that require redundant sessions with the redundant PDU session indication sent to the SMF; and iii) whether redundancy is enabled in the SMF for the traffic of the applications that require redundant SDF with the redundant PCC rule indication sent to the SMF.

The embodiments disclosed herein are advantageous in that they provide a way to enable the SMF to establish a redundant PDU session based on the UE subscription and service information held in the PCF. That is the embodiments provide a flexible solution where the PCF assists the SMF to determine whether a redundant PDU session is to be handled. The invention is defined by a method performed by a session management function, SMF, according to claim 1, a method performed by a Policy Control Function, PCF, according to claim 3, a method performed by a PCF according to claim 6, a computer program comprising instructions according to claim 9 and a carrier containing the computer program according to claim 10. Further embodiments are defined by the dependent claims.

### BRIEF DESCRIPTION OF THE DRAWINGS

The accompanying drawings, which are incorporated herein and form part of the specification, illustrate various embodiments.
FIG. 1 is a message flow diagram illustrating an embodiment.
FIG. 2 is a flowchart illustrating a process according to some embodiments.
FIG. 3 is a flowchart illustrating a process according to some embodiments.
FIG. 4 is a flowchart illustrating a process according to some embodiments.
FIG. 5 illustrates a CN node according to some embodiments.

### DETAILED DESCRIPTION

### Figure 1

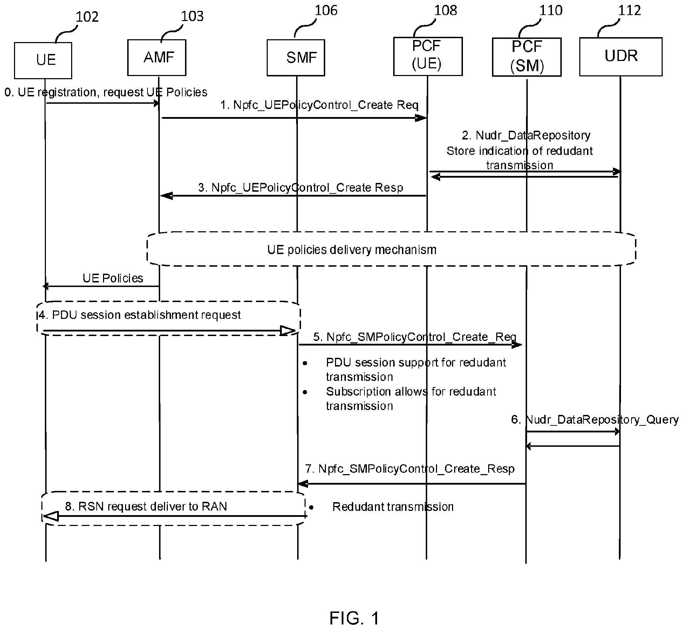

**FIG. 1** is a message flow diagram illustrating an embodiment.
0. In a first step, a UE 102 transmits a registration request to an AMF 104.
1. The registration request causes the AMF 104 to transmit a policy control request (e.g., a Npcf_UEPolicyControl_Create request) to a PCF 108 and includes in the policy control request a UE identifier that identifies a UE (e.g., a Subscription Permanent Identifier (SUPI) or a permanent equipment identifier (PEI)) and a UE PolicyContainer delivered by the UE 102, if provided by the UE 102 in the Registration Request.
2. After receiving the policy control request, the PCF 108 interacts with a data repository (e.g., a User Data Repository (UDR)) to fetch policy information associated with the UE 102 (e.g., the UE Policy Set stored in the UDR for the UE). This policy information for the UE 102 includes a list of allowed services (each of the allowed services is mapped to a DNN and S-NSSAI pair, and more than one service may be mapped to the same DNN and S-NSSIA pair). The PCF 108 then determines whether any of these allowed services require redundancy transmission. For each one of the services requiring redundancy transmission, the PCF 108 derives two URSP rules (a first URSP rule and a second URSP rule), which will be delivered to the UE and that will be stored in the UDR in association with the service (e.g., stored in association with the DNN and S-NSSAI pair to which the service is mapped).
3. The PCF 108 then responds to the AMF 104 with the a policy control response message (e.g., a Npcf_UEPolicyControl_Create response), which response message includes all of the URSP rule pairs derived by the PCF, which URSP rules allow for redundant transmission, assuming that the PCF determined that the UE should be sent URSP rules for redundant transmission.
3.5 The e2e procedure for UE policies delivery to the UE takes place. That is, the AMF 104 sends to the UE 102 the URSP rule pairs contained in the policy control response message.
4. At some point later, the UE 102 transmits a PDU session request message to establish a PDU session for a particular service (i.e., the particular DNN and S-NSSAI pair to which the service is mapped). Accordingly, the PDU session request message includes the DNN and S-NSSAI pair to which the particular service is mapped. This PDU session request message is received by SMF 106.
5. After the SMF 106 receives the PDU session request message transmitted by the UE 102, the SMF 106 sends to the PCF 110 a policy create message (e.g., a Npcf_SMPolicyControl_Create request message) that includes: i) the DNN and S-NSSAI from the PDU session request message, ii) information indicating that the user plane for a PDU session for this DNN and S-NSSAI pair is redundancy capable, and iii) subscription information (e.g., Unified Data Management (UDM) subscription information) for the UE that the SMF 106 retrieved from a data management system (e.g., a UDM); this subscription information indicates that the subscriber is allowed to have redundant transmissions. The SMF 106 determines that the user plane for the PDU session is redundancy capable based on RAN (e.g., NG-RAN) capabilities, UPF capabilities, and the DNN and S-NSSAI pair included in the PDU session request. Steps 5, 6, and 7 are not performed if either the subscriber is not allowed to have redundant PDU sessions or the PDU session is not redundancy capable.
6. Next, after receiving the policy create message transmitted by SMF 106, the PCF 110 fetches from the UDR information for the UE that indicates whether or not any of the allowed services for the UE that are mapped to the DNN and S-NSSAI pair included in the policy create message require redundancy. If any of these allowed services require redundancy and the PDU session is redundant capable and the UE is allowed to have redundant transmissions, then the PDU session should be set to redundant and the PCF 110 requests the SMF 106 to establish redundant PDU session by sending to the SMF a policy response message that includes a redundancy indication (e.g., a flag).
7. The PCF 110 sends to SMF 108 the policy response message (e.g., a Npcf_SMPolicyControl_Create response message) that includes the redundancy indication (e.g., a flag) indicating that the PDU session shall be handled as redundant.
8. After receiving the policy response message with the redundancy indication, the SMF 106 transmits to the UE 102 via a RAN a PDU Session Establishment response, this response includes an RSN value, and, because the policy response message included the redundancy indication, the SMF 106 sets the RSN value to request redundancy transmission.

The RAN will read the RSN value and because the RSN value is set to request redundant transmission, the RAN will establish a redundant connectivity with the UE with any available mechanism for redundancy.

As the above demonstrates the PCF 108 stores in the UDR the traffic descriptors for which redundant transmission is required. At Npcf_SMPolicyControl_Create, the SMF 106 provides the PDU session capabilities for support redundancy to the PCF 110. Also, at Npcf_SMPolicyControl_Create, the PCF 110 fetches from the UDR the traffic descriptors and route selection descriptors that require redundancy. At Npcf_SMPolicyControl_Create, and based on operator policies, the PCF 110 decides whether or not to establish a PDU session requiring redundant transmission. Also, the SMF 106 sets the RSN value towards RAN based on the PCF 110 indication.

### Figure 2

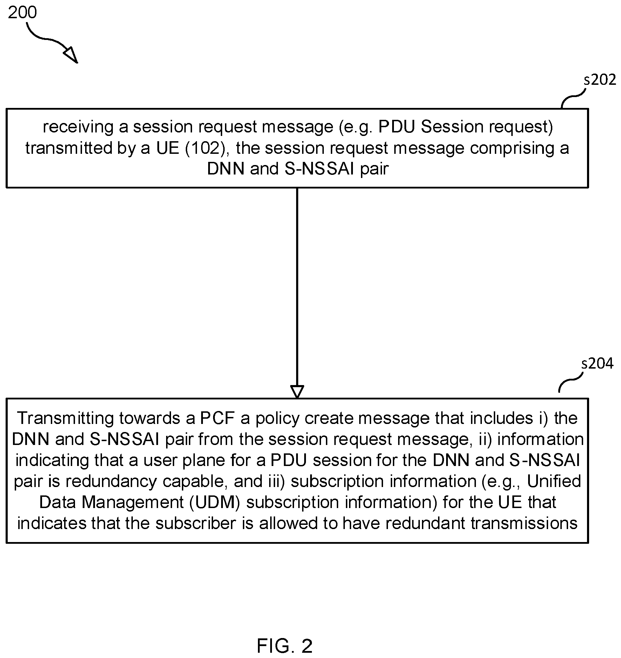

**FIG. 2** is a flowchart illustrating a process performed by the SMF 110 according to some embodiments.
S202. The SMF 106 receives a session request message (e.g. PDU Session request) transmitted by a UE 102. The session request message comprises a DNN and S-NSSAI pair;
S204. After receiving the session request message, the SMF 106transmits towards a PCF 110, a policy create message (e.g., a Npcf_SMPolicyControl_Create request message) that includes at least one of:
   i) the DNN and S-NSSAI pair from the session request message,
   ii) information indicating that a user plane for a PDU session for the DNN and S-NSSAI pair is redundancy capable, and
   iii) subscription information (e.g., Unified Data Management (UDM) subscription information) for the UE that indicates that the subscriber is allowed to have redundant transmissions.

### Figure 3

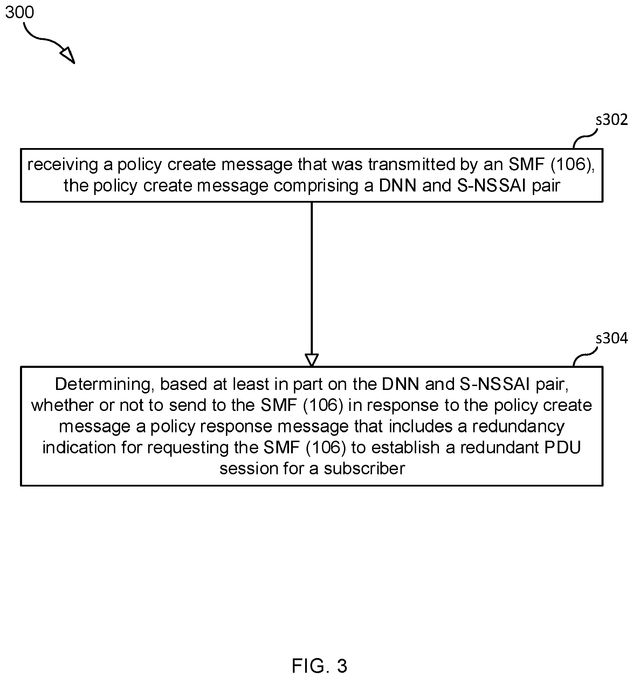

**Fig. 3** is a flowchart illustrating a process performed by the PCF 110 according to some embodiments.

S302. The PCF 110 receives a policy create message that was transmitted by a SMF 106. The policy create message comprises a DNN and S-NSSAI pair. The policy create message may also contain a subscriber identifier that identifies a subscriber.

S304. The PCF 110 determines, after receiving the policy create message transmitted by the SMF 106, based at least in part on the DNN and S-NSSAI pair, whether or not to send to the SMF 106 in response to the policy create message a policy response message that includes a redundancy indication for requesting the SMF 106 to establish a redundant PDU session for a subscriber, e.g., the subscriber identified by a subscriber identifier included in the policy create message.

### Figure 4

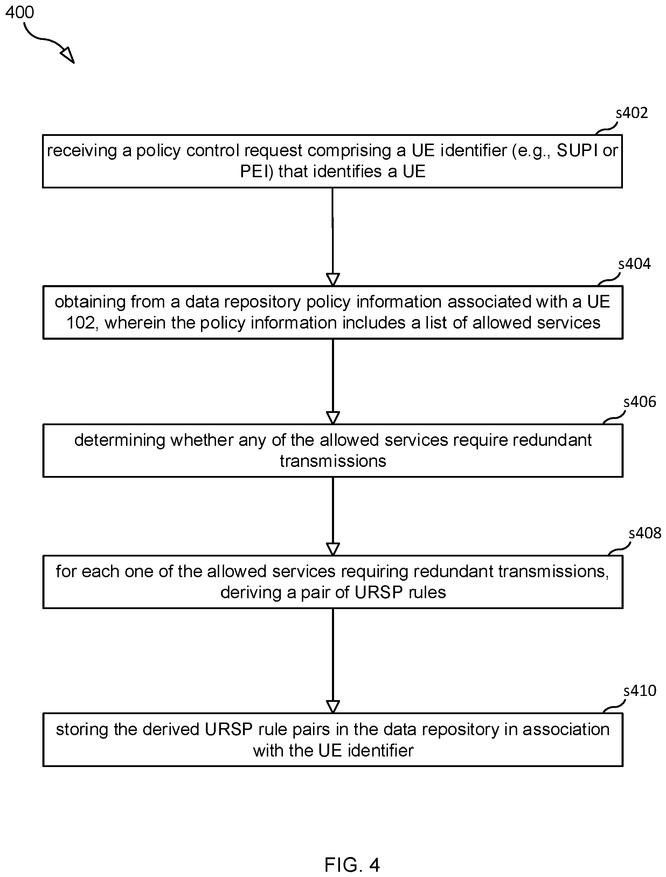

**Fig. 4** is a flowchart illustrating a process performed by the PCF 108 according to some embodiments.
S402. The PCF 108 receives a policy control request (e.g. a Npfc_UEPolicyControl Create Request) sent by a AMF 103, which policy control request comprises a UE identifier (e.g. SUPI or PEI) that identifies a UE 102.
S404. The PCF 108 obtains, after receiving the policy control request, from a data repository 112 policy information associated with a UE 102, wherein the policy information includes a list of allowed services.
S406. Then the PCF 108 determines whether any of the allowed services require redundant transmissions;
S408. Then the PCF 108 derives a pair of URSP rules for each one of the allowed services that requires redundant transmissions.
S410. Then the PCF 108 stores the derived URSP rule pairs in the data repository 112 in association with the UE identifier.

### Figure 5

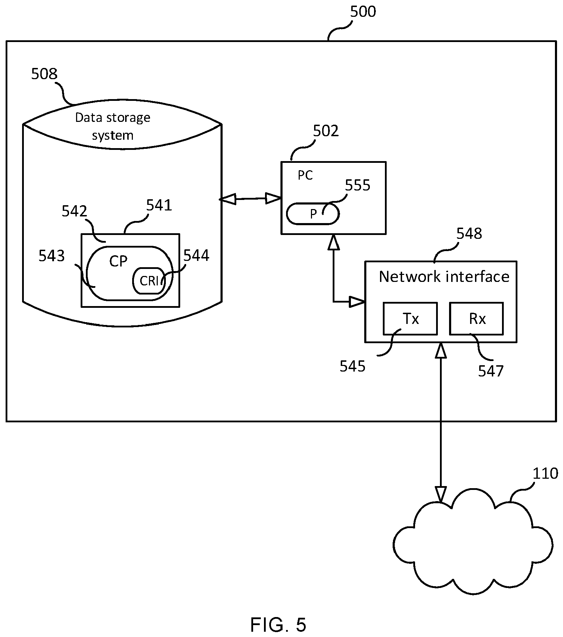

**FIG. 5** is a block diagram of a core network (CN) node 500, according to some embodiments, for implementing any one of the above described network functions (e.g., AMF, PCF, SMF, NEF, UPF, AF, etc.). As shown in FIG. 5, CN node 500 may comprise: processing circuitry (PC) 502, which may include one or more processors (P) 555 (e.g., a general purpose microprocessor and/or one or more other processors, such as an application specific integrated circuit (ASIC), field-programmable gate arrays (FPGAs), and the like), which processors may be co-located in a single housing or in a single data center or may be geographically distributed (i.e., CN node 500 may be a distributed computing apparatus); at least one network interface 548 comprising a transmitter (Tx) 545 and a receiver (Rx) 547 for enabling CN node 500 to transmit data to and receive data from other nodes connected to a network 110 (e.g., an Internet Protocol (IP) network) to which network interface 548 is connected (directly or indirectly) (e.g., network interface 548 may be wirelessly connected to the network 110, in which case network interface 548 is connected to an antenna arrangement); and a storage unit (a.k.a., "data storage system") 508, which may include one or more non-volatile storage devices and/or one or more volatile storage devices. In embodiments where PC 502 includes a programmable processor, a computer program product (CPP) 541 may be provided. CPP 541 includes a computer readable medium (CRM) 542 storing a computer program (CP) 543 comprising computer readable instructions (CRI) 544. CRM 542 may be a non-transitory computer readable medium, such as, magnetic media (e.g., a hard disk), optical media, memory devices (e.g., random access memory, flash memory), and the like. In some embodiments, the CRI 544 of computer program 543 is configured such that when executed by PC 502, the CRI causes CN node 500 to perform steps described herein (e.g., steps described herein with reference to the flow charts). In other embodiments, CN node 500 may be configured to perform steps described herein without the need for code. That is, for example, PC 502 may consist merely of one or more ASICs. Hence, the features of the embodiments described herein may be implemented in hardware and/or software.

Disclosed herein is, for example, a SMF 106 that receives a session request message transmitted by a User Equipment, UE 102, the session request message comprising a DNN and S-NSSAI pair; and after receiving the session request message, the SMF transmits towards a PCF 110, a policy create message that includes one or more of: i) the DNN and S-NSSAI pair from the session request message, ii) information indicating that a user plane for a PDU session for the DNN and S-NSSAI pair is redundancy capable, and iii) subscription information for the UE that indicates that the subscriber is allowed to have redundant transmissions. Also disclosed is a method in a PCF 108 that receives a policy control request comprising a UE identifier that identifies a UE 102; and after receiving the policy control request, obtains from a data repository 112 policy information associated with the UE 102, wherein the policy information includes a list of allowed services; and determines whether any of the allowed services require redundant transmissions; and for each one of the allowed services requiring redundant transmissions, deriving a pair of URSP rules; and storing the derived URSP rule pairs in the data repository 112 in association with the UE identifier.

While various embodiments are described herein, it should be understood that they have been presented by way of example only, and not limitation. The invention is defined by the appended claims.

## Claims

1. A method (200) performed by a session management function, SMF (106), the method comprising:
the SMF receiving (s202) a session request message transmitted by a User Equipment, UE (102), the session request message comprising a Data Network Name, DNN and Single-Network Slice Selection Assistance Information, S-NSSAI pair;
after receiving the session request message, the SMF transmitting (s204) towards a policy control function, PCF (110), a policy create message that includes one or more of:
i) the DNN and S-NSSAI pair from the session request message,
ii) information indicating that a user plane for a Packet Data Unit, PDU session for the DNN and S-NSSAI pair is redundancy capable, and
iii) subscription information for the UE that indicates that the subscriber is allowed to have redundant transmissions.

2. The method of claim 1, wherein the SMF (106) determines that the user plane for the PDU session is redundancy capable based on information indicating | Radio Access Network, RAN capabilities, information indicating User Plane Function, UPF capabilities, and the DNN and S-NSSAI pair.

3. A method (300) performed by a Policy Control Function, PCF (110), the method comprising:
receiving (s302) a policy create message that was transmitted by an SMF (106), the policy create message comprising a DNN and S-NSSAI pair; and
after receiving the policy create message transmitted by the SMF (106), determining (s304), based at least in part on the DNN and S-NSSAI pair, whether or not to send to the SMF (106) in response to the policy create message a policy response message that includes a redundancy indication for requesting the SMF (106) to establish a redundant PDU session for a subscriber.

4. The method of claim 3, wherein the step of determining whether or not to send to the SMF (106) a policy response message that includes the redundancy indication comprises:
the PCF (110) obtaining subscription information for the subscriber and determining whether the obtained subscription information indicates that one or more services that are mapped to the DNN and S-NSSAI pair require redundancy.

5. The method of claim 3 or 4, wherein the policy create message further comprises:
information indicating that a user plane for a PDU session for the DNN and S-NSSAI pair is redundancy capable, and
subscription information that indicates that the subscriber is allowed to have redundant transmissions.

6. A method (400) performed by a PCF (108), the method comprising:
receiving (s402) a policy control request comprising a UE identifier that identifies a UE (102);
after receiving the policy control request, obtaining (s404) from a data repository (112) policy information associated with the UE (102), wherein the policy information includes a list of allowed services;
determining (s406) whether any of the allowed services require redundant transmissions;
for each one of the allowed services requiring redundant transmissions, deriving (s408) a pair of UE Route Selection Policy, URSP, rules; and
storing (s410) the derived URSP rule pairs in the data repository (112) in association with the UE identifier.

7. The method of claim 6, wherein
each one of said allowed services requiring redundant transmissions is mapped to a DNN and S-NSSAI pair, and
for each of said allowed services requiring redundant transmissions, the URSP rule pair derived for the allowed service is stored in association with the DNN and S-NSSAI pair to which the allowed service is mapped.

8. The method of claim 6 or 7, further comprising transmitting towards the UE a message comprising the derived URSP rules.

9. A computer program (543) comprising instructions (544) which when executed by processing circuitry (502) of a Core Network, CN node (500) causes the CN node (500) to perform the method of any one of claim 1-8.

10. A carrier containing the computer program of claim 9, wherein the carrier is one of an electronic signal, an optical signal, a radio signal, and a computer readable storage medium (542).

## Patentansprüche

1. Verfahren (200), das von einer Sitzungsverwaltungsfunktion, SMF (106), durchgeführt wird, wobei das Verfahren Folgendes umfasst:
Empfangen (s202), durch die SMF, einer von einer Benutzerausrüstung, UE (102), übertragenen Sitzungsanforderungsnachricht, wobei die Sitzungsanforderungsnachricht ein Paar aus einem Datennetzwerknamen, D
NN, und Informationen zur Unterstützung bei der Auswahl eines einzelnen Netzwerkabschnitts, S-NSSAI, umfasst:
nach Empfangen der Sitzungsanforderungsnachricht, Übertragen (s204), durch die SMF, an eine Richtliniensteuerungsfunktion, PCF (110), einer Richtlinienerstellungsnachricht, die eines oder mehrere von Folgendem einschließt:
i) das DNN- und S-NSSAI-Paar aus der Sitzungsanforderungsnachricht,
ii) Informationen, die angeben, dass eine Benutzerebene für eine Paketdateneinheits-, PDU-, Sitzung für das DNN- und S-NSSAI-Paar redundanzfähig ist, und
iii) Teilnehmerinformationen für die UE, die angeben, dass dem Teilnehmer redundante Übertragungen gestattet sind.

2. Verfahren nach Anspruch 1, wobei die SMF (106) basierend auf Informationen, die Funkzugangsnetzwerk-, RAN-, Fähigkeiten angeben, Informationen, die Benutzerebenenfunktions-, UPF-, Fähigkeiten angeben, und dem DNN und S-NSSAI-Paar bestimmt, dass die Benutzerebene für die PDU-Sitzung redundanzfähig ist.

3. Verfahren (300), das von einer Richtliniensteuerungsfunktion, PCF (110), durchgeführt wird, wobei das Verfahren Folgendes umfasst:
Empfangen (s302) einer Richtlinienerstellungsnachricht, die von einem SMF (106) übertragen wurde, wobei die Richtlinienerstellungsnachricht ein DNN- und S-NSSAI-Paar umfasst; und
nach Empfangen der von der SMF (106) übertragenen Richtlinienerstellungsnachricht, Bestimmen (s304), zumindest teilweise basierend auf dem DNN- und S-NSSAI-Paar, ob als Reaktion auf die Richtlinienerstellungsnachricht eine Richtlinienantwortnachricht, die eine Redundanzangabe einschließt, an die SMF (106) gesendet werden soll oder nicht, um die SMF (106) aufzufordern, eine redundante PDU-Sitzung für einen Teilnehmer einzurichten.

4. Verfahren nach Anspruch 3, wobei der Schritt des Bestimmens, ob eine Richtlinienantwortnachricht, die die Redundanzangabe einschließt, an die SMF (106) gesendet werden soll oder nicht, Folgendes umfasst:
Erhalten, durch die PCF (110), von Teilnehmerinformationen für den Teilnehmer und Bestimmen, ob die erhaltenen Teilnehmerinformationen angeben, dass ein oder mehrere Dienste, die dem DNN- und S-NSSAI-Paar zugewiesen sind, Redundanz erfordern.

5. Verfahren nach Anspruch 3 oder 4, wobei die Richtlinienerstellungsnachricht weiter Folgendes umfasst:
Informationen, die angeben, dass eine Benutzerebene für eine PDU-Sitzung für das DNN- und S-NSSAI-Paar redundanzfähig ist, und
Teilnehmerinformationen, die angeben, dass dem Teilnehmer redundante Übertragungen gestattet sind.

6. Verfahren (400), das von einer PCF (108) durchgeführt wird, wobei das Verfahren Folgendes umfasst:
Empfangen (s402) einer Richtliniensteuerungsanforderung, die eine UE-Kennung umfasst, die eine UE (102) erkennt;
nach Empfangen der Richtliniensteuerungsanforderung, Erhalten (s404), von einem Datenspeicher (112), von Richtlinieninformationen, die der UE (102) zugeordnet sind, wobei die Richtlinieninformationen eine Liste erlaubter Dienste einschließen;
Bestimmen (s406), ob einer der erlaubten Dienste redundante Übertragungen erfordert;
für jeden der erlaubten Dienste, die redundante Übertragungen erfordern, Ableiten (s408) eines Paares von UE-Routenauswahlrichtlinien-, URSP-, Regeln; und
Speichern (s410) der abgeleiteten URSP-Regelpaare im Datenspeicher (112) in Verbindung mit der UE-Kennung.

7. Verfahren nach Anspruch 6, wobei
jeder der erlaubten Dienste, die redundante Übertragungen erfordern, einem DNN- und S-NSSAI-Paar zugewiesen wird, und
für jeden der erlaubten Dienste, die redundante Übertragungen erfordern, das für den erlaubten Dienst abgeleitete URSP-Regelpaar in Verbindung mit dem DNN- und S-NSSAI-Paar, dem der erlaubte Dienst zugewiesen ist, gespeichert wird.

8. Verfahren nach Anspruch 6 oder 7, das weiter das Übertragen einer Nachricht an die UE umfasst, die die abgeleiteten URSP-Regeln umfasst.

9. Computerprogramm (543), das Anweisungen (544) umfasst, die, wenn sie von einer Verarbeitungsschaltung (502) eines Kernnetzwerk-, CN-, Knotens (500) ausgeführt werden, den CN-Knoten (500) veranlassen, das Verfahren nach einem der Ansprüche 1-8 durchzuführen.

10. Träger, der das Computerprogramm nach Anspruch 9 beinhaltet, wobei der Träger eines von einem elektronischen Signal, einem optischen Signal, einem Funksignal und einem computerlesbaren Speichermedium (542) ist.

## Revendications

1. Procédé (200) effectué par une fonction de gestion de session, SMF (106), le procédé comprenant :
la SMF recevant (s202) un message de demande de session transmis par un Équipement d'Utilisateur, UE (102), le message de demande de session comprenant une paire nom de réseau de données, DNN, et informations d'aide à la sélection de tranche de réseau unique, S-NSSAI ;
après avoir reçu le message de demande de session, la SMF transmettant (s204) à une fonction de commande de politique, PCF (110), un message de création de politique qui inclut un ou plusieurs parmi :
i) la paire DNN et S-NSSAI du message de demande de session,
ii) des informations indiquant qu'un plan utilisateur pour une session d'unité de données par paquets, PDU, pour la paire DNN et S-NSSAI est capable de redondance, et
iii) des informations
d'abonnement pour l'UE qui indiquent que l'abonné est autorisé à présenter des transmissions redondantes.

2. Procédé selon la revendication 1, dans lequel la SMF (106) détermine que le plan utilisateur pour la session PDU est capable de redondance sur la base d'informations indiquant des capacités de réseau d'accès radio, RAN, d'informations indiquant des capacités de fonction de plan utilisateur, UPF, et de la paire DNN et S-NSSAI.

3. Procédé (300) effectué par une fonction de commande de politique, PCF (110), le procédé comprenant :
la réception (s302) d'un message de création de politique qui a été transmis par une SMF (106), le message de création de politique comprenant une paire DNN et S-NSSAI ; et
après avoir reçu le message de création de politique transmis par la SMF (106), la détermination (s304), sur la base au moins en partie de la paire DNN et S-NSSAI, du fait qu'il faut ou non envoyer à la SMF (106) en réponse au message de création de politique un message de réponse de politique qui inclut une indication de redondance pour demander à la SMF (106) d'établir une session PDU redondante pour un abonné.

4. Procédé selon la revendication 3, dans lequel l'étape de détermination du fait qu'il faut ou non envoyer à la SMF (106) un message de réponse de politique qui inclut l'indication de redondance comprend :
la PCF (110) obtenant des informations d'abonnement pour l'abonné et déterminant si les informations d'abonnement obtenues indiquent qu'un ou plusieurs services qui sont mappés sur la paire DNN et S-NSSAI nécessitent une redondance.

5. Procédé selon la revendication 3 ou 4, dans lequel le message de création de politique comprend en outre :
des informations indiquant qu'un plan utilisateur pour une session PDU pour la paire DNN et S-NSSAI est capable de redondance, et
des informations d'abonnement qui indiquent que l'abonné est autorisé à présenter des transmissions redondantes.

6. Procédé (400) effectué par une PCF (108), le procédé comprenant :
la réception (s402) d'une demande de commande de politique comprenant un identifiant d'UE qui identifie un UE (102) ;
après avoir reçu la demande de commande de politique, l'obtention (s404) à partir d'un référentiel de données (112) d'informations de politique associées à l'UE (102), dans lequel les informations de politique incluent une liste de services autorisés ;
la détermination (s406) du fait que l'un quelconque des services autorisés nécessite des transmissions redondantes ;
pour chacun des services autorisés nécessitant des transmissions redondantes, la dérivation (s408) d'une paire de règles de politique de sélection d'itinéraire d'UE, URSP ; et
le stockage (s410) des paires de règles URSP dérivées dans le référentiel de données (112) en association avec l'identifiant d'UE.

7. Procédé selon la revendication 6, dans lequel
chacun desdits services autorisés nécessitant des transmissions redondantes est mappé sur une paire DNN et S-NSSAI, et
pour chacun desdits services autorisés nécessitant des transmissions redondantes, la paire de règles URSP dérivée pour le service autorisé est stockée en association avec la paire DNN et S-NSSAI sur laquelle le service autorisé est mappé.

8. Procédé selon la revendication 6 ou 7, comprenant en outre la transmission vers l'UE d'un message comprenant les règles URSP dérivées.

9. Programme informatique (543) comprenant des instructions (544) qui, lorsqu'elles sont exécutées par des circuits de traitement (502) d'un noeud de réseau d'infrastructure, CN (500) amènent le noeud CN (500) à effectuer le procédé selon l'une quelconque des revendications 1-8.

10. Support contenant le programme informatique selon la revendication 9, dans lequel le support est l'un d'un signal électronique, d'un signal optique, d'un signal radio et d'un support de stockage lisible par ordinateur (542).
